# EUROPEAN PATENT APPLICATION

(11) **EP 2 679 514 A1**
(43) Date of publication of application: **01.01.2014**
(21) Application number: 12749589.3
(22) Date of filing: 24.02.2012
(51) Int. Cl.: B65D 77/04, B65D 77/06

(54) **EMERGENCY LIQUID-CARRYING BAG, ESPECIALLY FOR FUEL**

(30) Priority: 24.02.2011 ES 201130193 U
(71) Applicant: Manipulados En Centro Especial De Empleo, S.L., 28350 Cienpozuelos (Madrid) (ES)
(72) Inventor: PASCUAL MARTINEZ, Carmen, E-28021 Madrid (ES)
(74) Representative: Carpintero Lopez, Francisco
(86) International application number: PCT/ES2012/070112
(87) International publication number: WO 2012/113964

(57) **Abstract**

The invention consists in a bag made of flexible thermoplastic material designed so that the user can transport petrol or diesel fuel by hand, which comprises an inner bag made up of polyethylene film sheets welded together at the edges and equipped with a heat-welded rigid gland for easy filling, a thicker plastic outer bag containing an inner bag, and a handle for easy transport, said outer bag having a suitably sized hole so that said gland on the inner bag can emerge. The assembly is completed with a pouring cap that engages the gland by pressure after the bag is filled, and which once the stopper has been inserted into the gland it can not be removed again.

## Description

### SUBJECT MATTER OF THE INVENTION

The invention, as the name of the present document indicates, refers to an emergency bag for transporting liquids, especially fuel, adding several advantages and novel features to the state of the art, as will be described herein and which represent an improvement over the known state of the art in this market sector.

In particular, the subject matter of the invention is centred on a bag for transporting liquids of a type that is designed to be carried in a car as an accessory in case of emergency resulting from the vehicle running out of fuel. It is used to transport a small amount of gasoline or diesel fuel from a nearby service station to be poured into the fuel tank. It has the distinct feature of a structural configuration specifically designed to meet all of the requirements of the diverse applicable standards for said type of transport in containers used for this purpose.

### TECHNICAL FIELD OF THE INVENTION

The field of application of the present invention falls within the sector of the industry dedicated to manufacturing plastic containers and bags, focussing mainly on the area of bags designed to hold liquids, and especially flammable liquids and fuels.

### BACKGROUND OF THE INVENTION

As references to the state of the art, it must be pointed out that diverse types of bags are known in the market of the type at issue herein, among which should be mentioned those disclosed in documents MU9400345, MU200600305 or MU20082665, which, while suitably fulfilling the function of substituting the need to carry jerry cans or similar large containers, have significant safety issues, especially in relation to the system for pouring the liquid contained in the bag into the tank of the vehicle, as well as aspects that can be improved, such as the resistance of the bag itself and the ease in maintaining it upright so that it can be easily filled.

The purpose of the present invention is to provide the market with a new improved emergency bag, regarding which it should be mentioned that the applicant is unaware of the existence of any similar invention that has technical, structural and constitutive features similar to those of the present bag disclosed herein.

### DESCRIPTION OF THE INVENTION

Thus, the emergency bag for transporting liquids, especially fuel, proposed by the invention comprises a notable novelty in its field of application, given that its exhaustive implementation fulfils the aforesaid purpose; the characteristic details being what distinguish it from the known art, duly compiled in the final claims accompanying the present document.

Specifically, the invention proposes a bag made of flexible thermoplastic material designed so that in an emergency the user can transport petrol or diesel fuel manually. It comprises an inner bag made up of polyethylene film sheets welded together at the edges and equipped with a heat-welded rigid gland for easy filling, a thicker plastic outer bag containing an inner bag, and a handle for easy transport. The design has been specifically researched in order to create a seating base that enables the set of both bags to remain upright with the gland of the inner bag at the top in order to facilitate filling. Said outer bag has a suitably sized hole so that said gland of the inner bag can emerge.

Furthermore, the assembly is completed with a pouring cap that engages the gland by pressure after the bag is filled. As a safety means, once the stopper has been inserted into the gland it can not be removed again. This provides an easy and practical solution which, besides ensuring an hermetic seal during transport of the liquid fuel in order to avoid spills because its mouth is closed, enables pouring the fuel into the tank of the vehicle easily and safely.

For this, said pouring cap, made of rigid plastic material, has a conical tubular shape and at its end or mouth, which as previously indicated is closed in principle, has been provided a pre-cut to facilitate breaking right before pouring, thus guaranteeing a single use of the bag.

Finally, it may be pointed out that the group of elements comprising the proposed emergency bag includes packaging or wrapping for keeping it together, thus forming an emergency kit. Said packaging serves for inserting the bag after it has been used and emptied and depositing it in the recycling container for plastic material in a clean and safe manner.

Thus it is evident that the disclosed emergency bag for transporting liquids, especially fuel, is an innovative structure unknown until now, with structural and constitutive features for the purpose for which it is designed, reasons that, together with its practical utility, endow it with sufficient grounds to obtain the privilege of exclusivity that is sought.

### DESCRIPTION OF THE DRAWINGS

To complement the description being provided and for the purpose of contributing to a better understanding of the features of the invention, attached to the present document and as an integral part thereof, is a set of drawings having a non limiting illustrative character that depict the following:
Figures 1-A 1-B display, respectively give an elevational view of an example of an embodiment of the emergency bag for transporting liquids, especially fuel, subject of the invention, and an enlarged view of it bottom area, in which the main parts and elements that comprise it can be seen, as well as the configuration and disposition of the same.
Figure 2 displays a sectional view of the bag, along the A-B cut depicted in Figure 1-A.
Figure 3 displays a sectional view of the bag, according to a vertical cut of the same similar to the one displayed in Figure 2, but in which the bag filled with liquid has been depicted so that the manner in which it is maintained upright thanks to the design of the outer bag can be seen.
Figure 4 displays a sectional view of the pouring cap engaged to the gland of the inner bag along the C-D cut depicted in Figure 3.

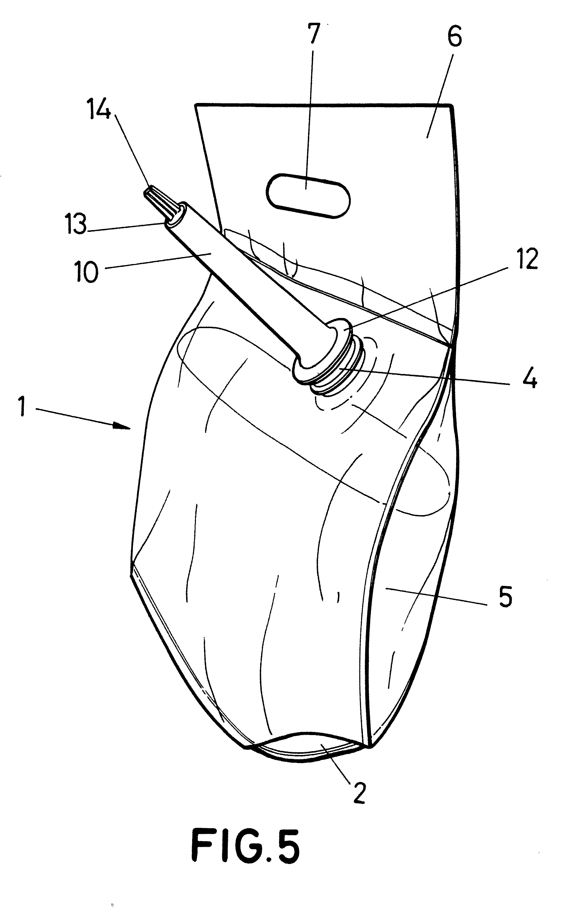

Figure 5 displays a perspective view of the bag of the invention full of liquid and with the pouring cap in place.

### PREFERRED EMBODIMENT OF THE INVENTION

In light of the cited figures and in accordance with the numbering adopted, an example of the preferred embodiment of the invention can be seen, which comprises the identified parts and elements that are described below in detail.

Thus, as displayed in said figures, subject emergency bag (1) made overall with flexible thermoplastic material, is essentially configured based on inner bag (2) for containing the liquid and having a gland (4) for introducing the liquid, external bag (5) which, among other things, envelops and protects inner bag (2), and pouring cap (10) engageable to the gland and that ensures its hermeticity after inner bag (2) is filled, and facilitates pouring into the tank.

Going into greater detail of each one of said elements, it may be pointed out that inner bag (2) is comprised of polyethylene film sheets joined to each other along the perimeters by welding lines (3), and is equipped with a gland (4) having a circular configuration and rigid heat welding material, located on one side of its top part.

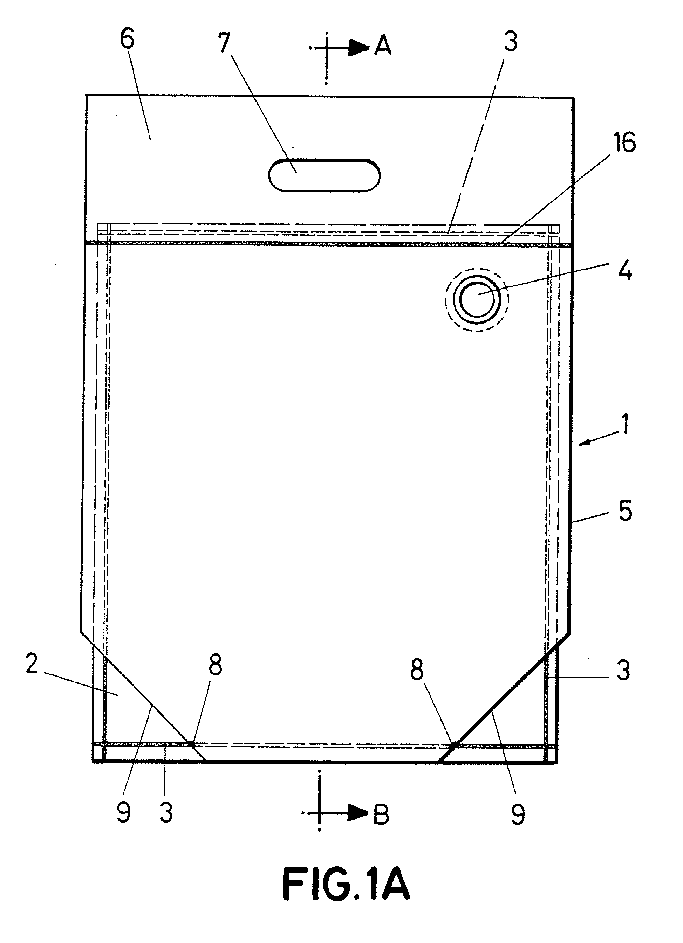

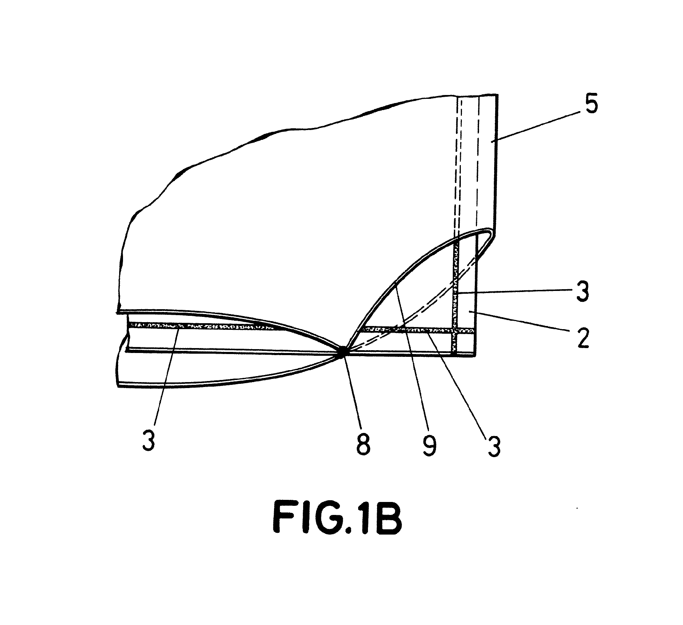

On its part, outer bag (5), likewise of plastic material, but thicker than that of inner bag (2), is comprised of a sheet that, enveloping said inner bag (2), extends upwards over it creating a top section (6) in which a punch in the shape of handle (7) for facilitating transport and, at the bottom, as displayed in the detail of Figure 1B, has bottom welding points (8) that join its front and rear parts to each other and to inner bag (2), and oblique cuts (9) that leave exposed the bottom corners of said inner bag (2).

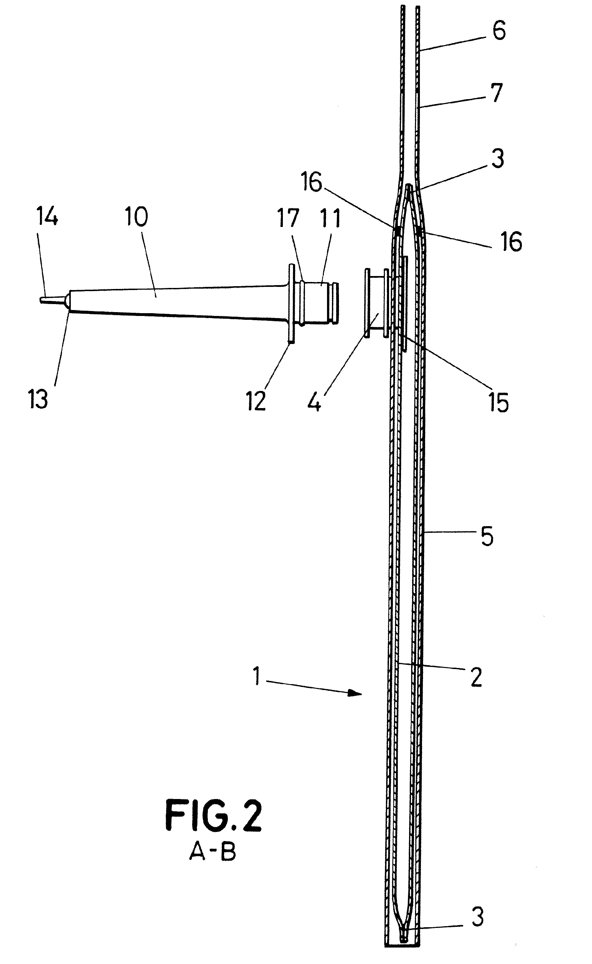

This outer bag (5), furthermore, has a circular opening located and sized to coincide with gland (4), and into which the gland is inserted emerging outwardly, as can be seen in Figure 2. Continuing with said Figure 2, it can also be seen how gland (4) has a rear fin (15) that enables it to form a weld to the inside part of inner bag (2), and how said inner bag (2) is joined to outer bag (5) by means of top weld points (16).

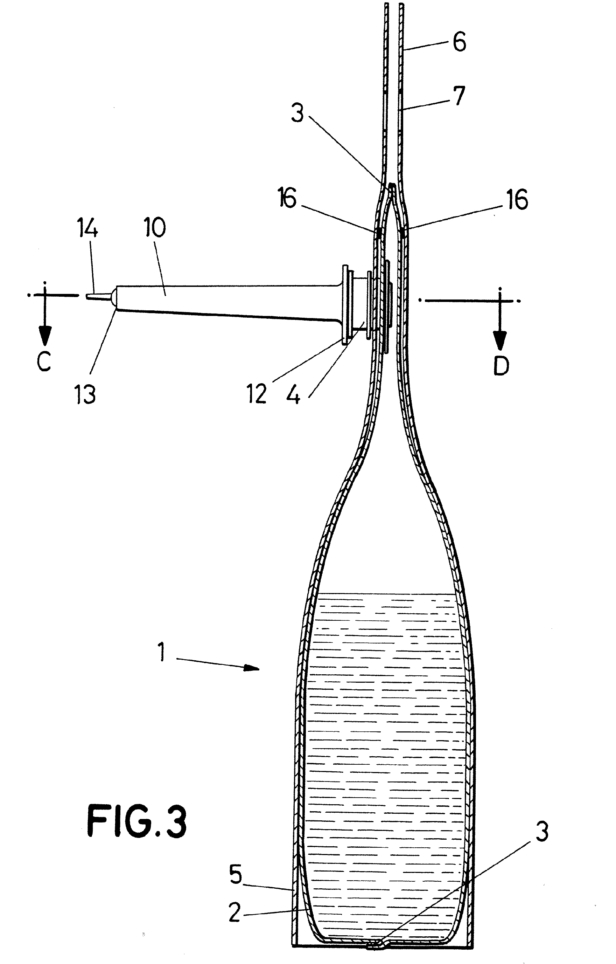

Thus, thanks to the design of outer bag (5), when it is filled with liquid, a seat base is formed that enables the assembly to remain firm with the gland at the top part as displayed in Figure 3.

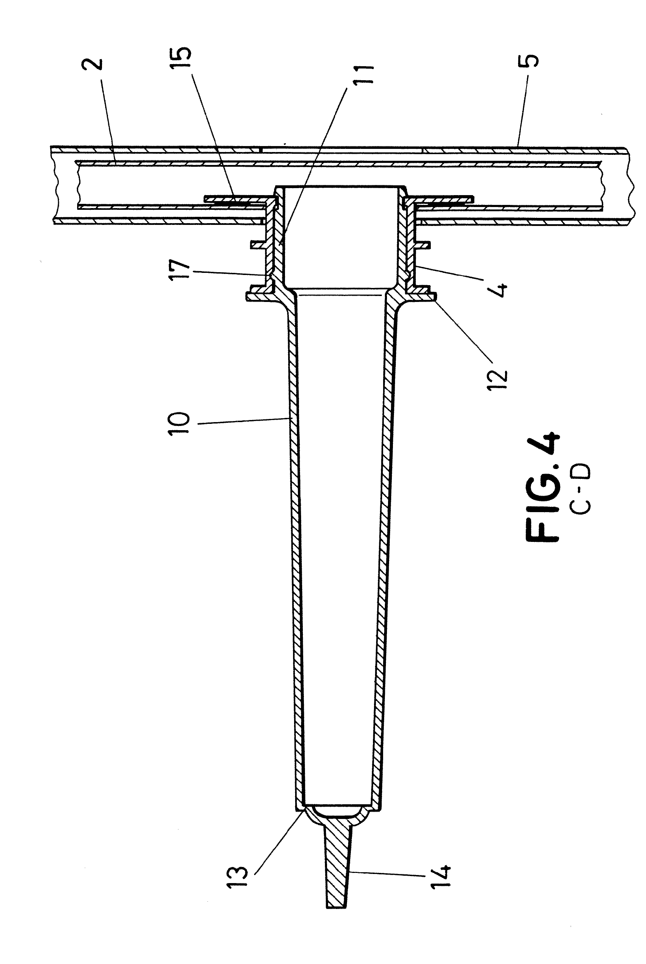

With regard to pouring cap (10) as can be seen in Figure 2 and Figure 4, it has a conical tubular configuration and is made of a plastic material having a rigid character, has gland (4) for obtaining its pressure welded assembly, which is circular and has a coupling base (11) having slightly smaller dimensions than the internal diameter of said gland (4), in such a way that it penetrates tightly inside it, having said base a projection (17) apt to fit into a recess inside of said gland (4) designed for said purpose, and having a peripheral fin (12) superimposed on the perimeter of the gland (4).

Pouring cap (10) furthermore, has on its opposite end, which constitutes the mouthpiece for pouring the liquid, a pre-cut (13) to facilitate breaking the tip (14) of said end when having to pour.

Having sufficiently described the nature of the present invention, as well as the manner to put into practice, a more extensive explanation is not deemed needed for a person skilled in the art to be able to understand its scope and the advantages that it provides, while stating that within its essence it will be possible to put into practice other forms of embodiments that may differ in detail from those indicated as examples, and which will likewise reach the protection that is obtained, as long as its main principle is not altered, changed or modified.

## Claims

1. Emergency bag for transporting liquids, especially fuel, of the type made with flexible thermoplastic material having a gland for introducing the poured liquid and with a handle for facilitating transport, **characterised in that** it comprises:
- an inner bag (2) made up of polyethylene film sheets welded together at the edges by welding lines (3) that incorporates a circular gland (4) located on one side of its top part;
- an outer bag (5) which envelops and protects inner bag (2), made of a sheet of thicker plastic material than said inner bag (2) and that is extended upwards to form a top section (6) on which a punch forms the handle (7), and at the bottom has bottom welding points (8) that join its front and rear part together and to inner bag (2), and oblique cuts (9) that leave uncovered the bottom corners of said inner bag (2), in such a way that when filled with liquid, a seat base is formed, which enables the assembly to maintain rigidity, said outer bag (5) having, furthermore, a circular opening located and sized to coincide with the gland (4), into which said gland is inserted for emerging outward;
- a pouring cap (10) provided with means for coupling to gland (4) by means of pressure after filling the bag in order to facilitate pouring.

2. Emergency bag for transporting liquids, especially fuel, according to claim 1, **characterised in that** gland (4) has a rear fin (15) that enables its welding to the inner part of inner bag (2).

3. Emergency bag for transporting liquids, especially fuel, according to claims 1 and 2, **characterised in that** inner bag (2) is joined to outer bag (5) by means of top welding points (16).

4. Emergency bag for transporting liquids, especially fuel, according to claim 1, **characterised in that** pouring cap (10) has a conical tubular configuration and is made of rigid plastic material.

5. Emergency bag for transporting liquids, especially fuel, according to claims 1 and 4, **characterised in that** pouring cap (10) has a coupling base (11) having slightly smaller dimensions than the internal diameter of said gland (4) in such a way that it penetrates tightly inside of it, having said base a projection (17) apt to fit into a recess inside of said gland (4) designed for said purpose, and having a peripheral fin (12) superimposed on the perimeter of the gland (4).

6. Emergency bag for transporting liquids, especially fuel, according to claim 1, **characterised in that** pouring cap (10) has on its end that constitutes the mouthpiece for pouring the liquid, a pre-cut (13) to ease the breaking of the tip (14) of said end when having to pour.
